# EUROPÄISCHE PATENTSCHRIFT

(11) **EP 2 022 961 B1**
(45) Veröffentlichungstag und Bekanntmachung des Hinweises auf die Patenterteilung: **25.01.2017**
(21) Anmeldenummer: 08450119.6
(22) Anmeldetag: 04.08.2008
(51) Int. Cl.: F02B 75/32

(54) **Kolbenmaschine**
Reciprocating engine
Machine à piston

(30) Priorität: 07.08.2007 AT 12382007
(43) Veröffentlichungstag der Anmeldung: 11.02.2009
(73) Patentinhaber: Frauscher Holding GmbH, 4774 St. Marienkirchen (AT)
(72) Erfinder: Frauscher, Josef, 4774 St. Marienkirchen (AT)
(74) Vertreter: Patentanwaltskanzlei Hübscher

(56) Entgegenhaltungen:
- AT-U1- 5 581
- DE-A1- 3 926 797
- SU-A1- 1 200 002

## Beschreibung

Die Erfindung bezieht sich auf eine Kolbenmaschine, bei der jedem Kolben zusätzliche Führungseinrichtungen zur Aufnahme der bei den Schwenkbewegungen des Pleuels auftretenden Querkräfte zugeordnet sind, welche Führungseinrichtungen gegengleich um die Achse des Kolbenbolzens schwenkbar gelagerte Lenkarme aufweisen, die sich an seitlichen Führungen z. B. der Zylinderwand oder des Kurbelgehäuses mit zur Achse des Kolbenbolzens konzentrischen Kreisabschnitten folgenden Abstützungen abwälzen.

Kolbenmaschinen mit einem oder mehreren Zylindern, deren Kolben über Pleuel mit der Kurbelwelle verbunden sind, sind in verschiedensten Ausführungen im Einsatz. U.a. sind entsprechende Kolbenmaschinen als Brennkraftmaschinen, Heißgasmotoren (Stirlingmaschinen), Kühlmaschinen und Kompressoren bekannt.

Bei der Kraftübertragung zwischen Kolben und Kurbelwelle schwenkt das Pleuel außerhalb der beiden Todstellungen gegenüber der Kolbenachse, wodurch Querkräfte entstehen, für deren Aufnahme Führungsflächen am Kolben notwendig sind oder eben zusätzliche Einrichtungen erforderlich werden.

Eine Maschine der eingangsgenannten Art ist aus der SU 1 200 002 A bekannt. Den theoretischen Vorteilen einer gegengleichen Abstützung steht nachteilig gegenüber, dass bei dieser bekannten Ausführung am Kolbenbolzen sieben Lager, nämlich ein Pleuellager, zwei Lager für den Kolbenbolzen und je zwei Lager für die beiden Lenkarme benötigt werden, was die Realisierung der Praxis erschwert bzw. unmöglich macht, weil die für die erwähnten Lager benötigte Länge des Kolbenbolzens zu groß wird, was die Anwendung der Konstruktion bei Maschinen mit mehrere Zylinder- Kolbeneinheiten fast unmöglich macht und bei Maschinen mit nur einem Zylinder sehr schmale Lager erfordern würde, wodurch die Lebensdauer stark eingeschränkt wird. Die Lager der Lenkarme müssen gegeneinander versetzt werden, sodass Unsymmetrien auftreten. Eine Dauerschmierung soll vermieden werden. Ähnliche Mittel und Nachteile sind auch bei der Konstruktion nach der eigenen AT 005581 vorhanden.

Andere zur Lösung der gleichen Aufgabe eingesetzte Führungseinrichtungen haben ebenfalls grundsätzliche Nachteile, insbesondere einen erhöhten Schmierungsbedarf wegen zusätzlicher Reibungsverluste und aufwändiger Konstruktion. Als Beispiel sei hier ein so genanntes Knickpleuel genannt.

Unter anderem aus der DE 577 389 A ist die Ausbildung der zusätzlichen Führungen in Form eines Kreuzkopfes bekannt. Auch hier kommt es zu einem erhöhten Verschleiß durch die Querkräfte und entsprechende Reibungsverluste zwischen den meist in gleitendem Eingriff stehenden Flächenpaaren, wobei zur Verminderung dieser Reibung wieder eine kräftige Schmierung notwendig wird.

Eine Variante zur Kreuzkopfführung ist aus der EP 0 529 935 A1 bekannt, bei der der Kreuzkopf der erstgenannten Konstruktion durch einen in einer Verlängerung des Arbeitszylinders vorgesehenen Führungszylinder mit einem in ihm geführten Führungskolben ersetzt ist, in dem das Pleuel schwenkbar lagert, wobei unterhalb des Führungskolbens im Kurbelgehäuse bzw. Zylinderende Bewegungsausschnitte für das Pleuel vorzusehen sind.

Nach der DE 577 389 A wird in einer seitlichen Vergrößerung des Kurbelgehäuses eine Parallelführung vorgesehen, die mit einer herausgeführten Lasche des schürzenartig ausgebildeten Kolbenbolzens gelenkig verbunden ist und nach einer Ausführung einen parallel zum Kolben verstellbaren Schlitten führt, und nach einer anderen Ausführung als schwenkbarer Lenkarm mit an einem Ende gelagerten, in eine verzahnte Halbkreisführung eingreifendes Zahnradsegment ausgebildet ist. Hier treten Zahnradsegment ausgebildet ist. Hier treten durch die Unsymmetrien störende Massenkräfte auf, und die Konstruktion lässt sich wirtschaftlich kaum realisieren.

Zur Verringerung der Baulänge für die Lagerung von Kolbenpleueln am Kurbelzapfen ist es prinzipiell bekannt, nur Lagerteilschalen an den Pleueln vorzusehen, die sich nur auf einem Teilbereich des Umfanges des Kurbelzapfens abstützen. Wegen den beim Rückhub des Kolbens wirksam werdenden Abhebekräften ist es hier notwendig, zusätzliche Rückhalter vorzusehen, wodurch sich eine äußerst aufwendige Gesamtkonstruktion ergibt. Die Rückhalter bestehen nach der DE 667 005 C aus zwei zusammengeschraubten Ringhälften im Falle eines Sternmotores mit mehreren Zylindern. Ähnliche Halterungen bei V- oder Reihenmotoren werden nach der DE 923 229 C verwendet. In beiden Fällen ergeben sich an den Rückhaltern zusätzliche Reibungskräfte und wegen der Verspannung werden auch die Lagerteilschalen dauernd mit relativ hoher Kraft, der sich die Kolbenkraft periodisch überlagert, gegen den Kurbelzapfen gepresst. Es ist daher bei beiden Ausführungen zwingend notwendig, sowohl für die Lagerstellen am Kurbelzapfen als auch die Angriffsstellen der Rückhalter an den Lagerteilschalen Zwangsschmiereinrichtungen vorzusehen, die bei anderen Maschinen nicht vorhanden oder sogar unbrauchbar sind.

Aufgabe der Erfindung ist es, eine hinsichtlich des Grundprinzips vorteilhafte Konstruktion nach der eingangsgenannten Art so zu verbessern, dass sie unter Verringerung des baulichen Aufwandes reibungs- und schwingungsarm arbeitet, keine untragbare Verlängerung des Kolbenbolzens erfordert und bei der die bewegten Massen der Führungseinrichtung zur Verringerung der auftretenden Schwingungen gegengleich symmetrisch anbringbar sind, wobei trotzdem nur geringe Reibungsverluste auftreten sollen und eine Zwangsschmierung zu vermeiden ist.

Der Grundgedanke der Erfindung besteht darin, dass die Lenkarme paarweise für sich und frei von gegenseitiger Abstützung und Führung mit jeweils dem gleichen Längsbereich der Achse des Kolbenbolzens zugeordneten Lagerteilschalen gelagert sind. Damit wird die für die Lagerung benötigte Länge des Kolbenbolzens um die Hälfte verringert, sodass genügend breite Lagerteilschalen eingesetzt werden können. Die Lagerteilschalen können auch eine den Schmiermittelaustritt vermeidende Dauerschmierung erhalten, was immer und insbesondere bei Stirlingmaschinen und ähnlichen Heißgasmaschinen sogar eine wesentliche Betriebsanforderung darstellt.

Nach einer Weiterbildung der Erfindung greifen die Abstützungen der Lenkarme mit einer mittleren Zahnspur in eine zugeordnete Längszahnspur der seitlichen Führungen ein und stützen sich beidseits dieser Führungsspur mit glatten Flächen an der Führung ab.

Die Zahnspur erfüllt hier nur die Aufgabe, die Bewegungsabläufe der Abstützungen in der gewünschten Form eindeutig zu sichern. Der gesamte Teil der Abstützung wird von glatten Flächen übernommen, wenn sich diese glatten Teile der Abstützungen an den Führungsflächen abwälzen. Eine Schmierung der Zahnspur ist daher nicht notwendig.

Die Abstützungsflächen der Führungen können gegen den Mittelbereich zu verbreitert, z. B. kreisförmig ausgebildet sein. Bei dieser Ausführung wird berücksichtigt, dass der größte Druck auf die Abstützungsflächen in der Mittelstellung des Kolbens ausgeübt wird, wogegen in den Totpunktstellungen nur mehr der Eingriffsdruck, aber keine vom Pleuel ausgeübten Querkräfte vorhanden sind, also eine größere Abstützung nicht benötigt wird.

Die Länge der Lenkarme ist vom Kolbenhub und dem zur Verfügung stehenden Unterbringungsraum für diese Arme abhängig. In den meisten Fällen ist dabei eine Ausführung möglich, bei der die Summe der Umschlingungswinkel der einander zugeordneten Lagerteilschalen um die Achse kleiner als 360° minus dem Schwenkwinkel gewählt ist, sodass sich die Lagerteilschalen in den beiden Todpunktstellungen mit ihren Enden nicht berühren.

Wenn eine gedrängte Bauweise, besonders bei relativ langen Kolbenhüben erwünscht ist, kann man auch eine Ausführung wählen, bei der die Summe der Umschlingungswinkel der einander zugeordneten Lagerteilschalen um die Achse gleich oder größer als 360° minus den Schwenkwinkeln gewählt ist und die Lagerteilschalen einander im Bereich der Totpunktstellungen des Kolbens mit ineinandergreifenden Absätzen bzw. Profilierungen überlappen.

Eine besonders vorteilhafte und sich durch sehr geringe Reibungsverluste auszeichnende Konstruktion besteht darin, dass die Lagerteilschalen als Gleitlagerelemente ausgebildet sind, die sich über den Außenring eines für beide Teilschalen gemeinsamen Wälzlagers auf dem Kolbenbolzen abstützen, sodass dieses Wälzlager zumindest im Auftrittsbereich der größeren Querkräfte wechselweise die Drehlagerung des momentan stärker belasteten Lenkarmes vom Gleitlager übernimmt.

Neben der Ausstattung der Lenkarme mit einem Gleitlagerbelag besteht auch die Möglichkeit, als Gleitlager einen auf dem Außenring des Wälzlagers aufgezogener Gleitbelagsring vorzusehen, auf dem sich die Lagerteilschalen der Lenkarme abstützen.

Im Bedarfsfall kann als Wälzlager ein Nadellager mit Dauerschmierung eingesetzt werden.

Weitere Vorteile des Erfindungsgegenstandes entnimmt man der nachfolgenden Zeichnungsbeschreibung.

In der Zeichnung ist der Erfindungsgegenstand beispielsweise dargestellt. Es zeigen in jeweils schematisch vereinfachter Darstellungsweise
- Fig. 1: den grundsätzlichen Aufbau einer erfindungsgemäßen Maschine bei nur teilweise dargestelltem Kurbelgehäuse im Längsschnitt,
- Fig. 2: einen Schnitt nach der Linie II-II der Fig. 1,
- Fig. 3: in einer der Fig. 2 entsprechenden Darstellungsweise eine Maschine, mit einer Variante der Lenkarmlagerung,
- Fig. 4: eine weitere Variante der Lenkarmlagerung,
- Fig. 5: die Eingriffsstellung eines mit einer Zahnspur versehenen Lenkarmes, in die eine Längszahnspur aufweisende Führungsfläche in der unteren Tot-punktstellung des Kolbens,
- Fig. 6: als Detail eine mögliche Art der Überlappung der Lagerteilschalen bei dem größeren Umschlingungswinkel,
- Fig. 7: eine mögliche Ausführung der Führungsfläche in Ansicht,
- Fig. 8: eine weitere Ausgestaltung der Führungsflächen,
- Fig. 9: in der Fig. 5 entsprechenden Darstellungsweise eine Ausführungsvariante, bei der sich die Lagerteilschalen am Außenring eines auf die Kurbelwelle aufgezogenen Wälzlagers abstützen und
- Fig. 10: eine Ausführungsvariante nach der Fig. 9, nach der auf dem Außenring des Wälzlagers ein Ring aus Gleitlagermaterial aufgezogen ist.

Die gezeigte Kurbelmaschine besitzt ein Kurbelgehäuse 1, an das ein oder mehrere Zylinder 2 anschließen, wobei in dem bzw. jedem Zylinder 2 ein Kolben 3 mit Kolbenschürze 3a arbeitet und der Kolbenbolzen 4 über ein Pleuel 5 mit einem Kurbelzapfen 6 der Kurbelwelle 7 verbunden ist.

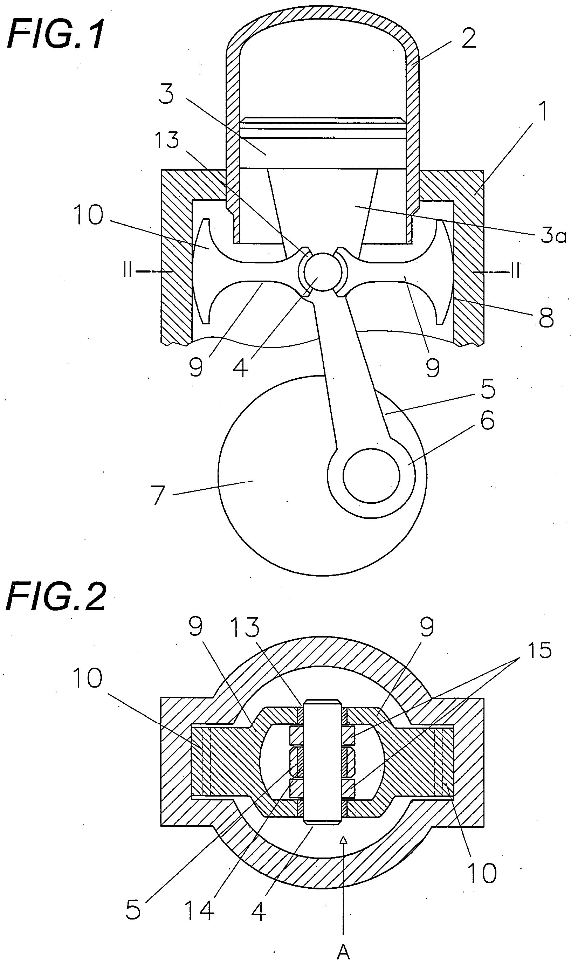

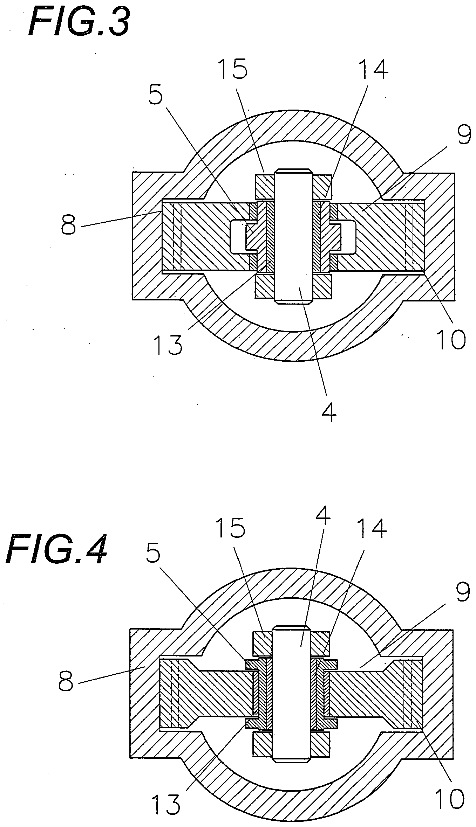

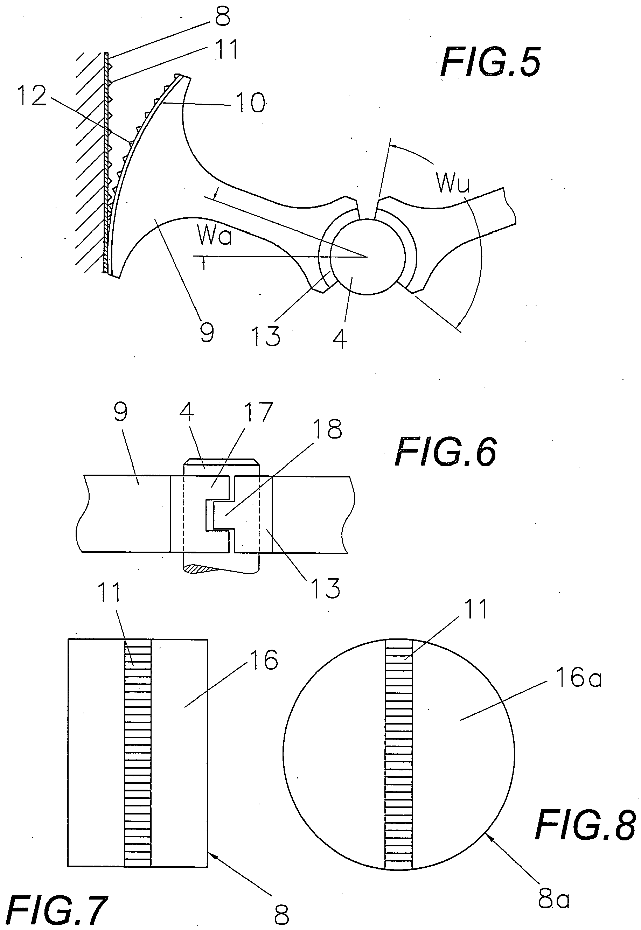

Im Kurbelgehäuse sind einander gegenüber zur Zylinderachse und zum Kolbenbolzen 4 parallele Führungsflächen 8 vorgesehen, an denen sich gegengleich angeordnete Lenkarme 9 mit verbreiterten Abstützungen 10 abwälzen, wobei die für den Eingriff mit der Führung 8 bestimmte Seite der Abstüt-zung einem zur Achse des Kolbenbolzens 4 konzentrischen Kreisbogen folgt. In den Fig. 2 - 4 und insbesondere in Fig. 5 wurde angedeutet, daß die Abstützungen 10 und die Führungen 8 ineinandergreifende Verzahnungen 11, 12 aufweisen können. Der Unterschied zwischen den Ausführungen nach den Fig. 2, 3 und 4 besteht darin, daß nach Fig. 2 das Pleuel 5 in der Mitte des Kolbenbolzens 4 gelagert ist und die Lenkarme 9 zu beiden Seiten des Pleuels 5 am Kolbenbolzen 4 gelagert sind, wobei für die Gabelenden Lagerteilschalen 13 und für das Pleuel 5 Lager 14 Verwendung finden. Bei der Ausführung nach Fig. 3 sind die Lenkarme 9 wieder mit Gabelenden und Lagerteilschalen 13 auf einer für sich gelagerten Endbuchse 15 des Pleuels gelagert.

Nach Fig. 4 sind die Lenkarme 9 auf einem mittleren Lager 14 wieder mit Lagerteilschalen 13 abgestützt.

Fig. 5 zeigt eine Ausführung, bei der die Summe der Umschlingungswinkel Wu der Lagerteilschalen 13 um die Achse 4 kleiner ist als 360 °C minus dem vierfachen halben Schwenkwinkel Wa, sodass sich die Lagerteilschalen 13 in den beiden Todpunktstellungen des Kolbens nicht berühren.

Fig. 6 zeigt eine Variante, bei der der Schwenkwinkel größer als die obengenannte Bedingung ist, sodass sich die Lagerteilschalen 13 in beiden Totpunktstellungen mit ineinandergreifenden Profilen 17, 18 überlappen.

Schließlich zeigt Fig. 7 eine Führungsfläche 8 in Rechteckform, bei der eine mittlere Zahnspur 11 für den Eingriff mit einer Gegenzahnspur 12 am Teil 9 vorhanden ist und beidseits der Zahnspur 11 rechteckige Führungsflächen aufscheinen.

Bei der Ausführung nach Fig. 8 hat die Führungsfläche 8a Kreisform und daher entsprechend teilkreisförmige äußere Führungsflächen 16a.

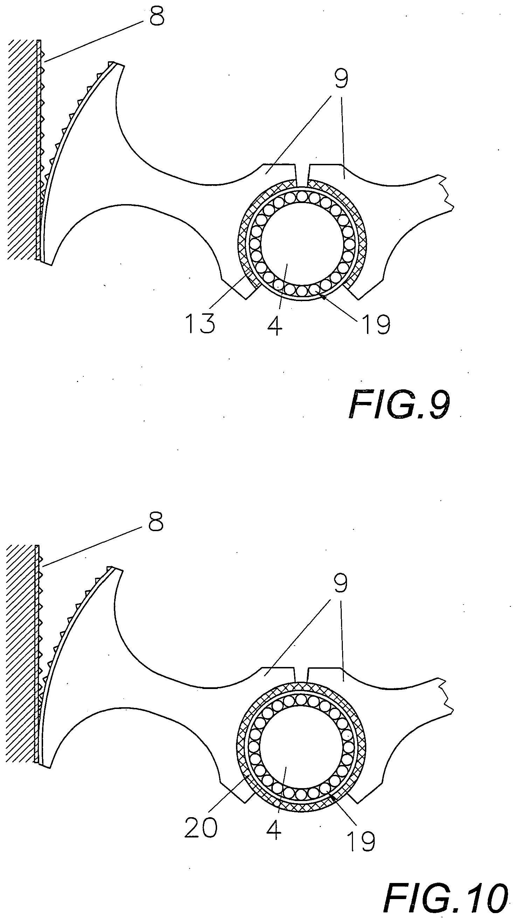

Bei der Ausführung nach Fig. 9 stützen sich die Lagerteilschalen 13 am Außenring eines auf die Kurbelwelle 4 aufgezogenen Wälzlagers 19 ab, sodass dieses Wälzlager 19 während der größeren Druckbelastung jeweils in der einen bzw. anderen Drehrichtung die Hauptbelastung der Lagerkräfte aufnimmt.

Die gleichen Vorteile hat die Ausführung der Fig. 10, bei der ein den Gleitbelag aufweisender Ring 20 auf den Außenring des Wälzlagers 19 aufgezogen ist.

## Patentansprüche

1. Kolbenmaschine, bei der jedem Kolben (3) zusätzliche Führungseinrichtungen zur Aufnahme der bei den Schwenkbewegungen des Pleuels (5) auftretenden Querkräfte zugeordnet sind, welche Führungseinrichtungen gegengleich um die Achse des Kolbenbolzens (4) schwenkbar gelagerte Lenkarme (9) aufweisen, die sich an seitlichen Führungen (8) z. B. der Zylinderwand oder des Kurbelgehäuses mit zur Achse des Kolbenbolzens (4) konzentrischen Kreisabschnitten folgenden Abstützungen (16, 16a) abwälzen, **dadurch gekennzeichnet, dass** die Lenkarme (9) paarweise für sich und frei von gegenseitiger Abstützung und Führung mit jeweils dem gleichen Längsbereich der Achse des Kolbenbolzens (4) zugeordneten Lagerteilschalen (13) gelagert sind.

2. Kolbenmaschine nach Anspruch 1, **dadurch gekennzeichnet, dass** die Abstützungen der Lenkarme (4) mit einer mittleren Zahnspur (12, 12a) in eine zugeordnete Längszahnspur (12) der seitlichen Führungen (8, 16, 16a) eingreifen und sich beidseits dieser Führungsspur (12) mit glatten Flächen (16, 16a) an der Führung abstützen (Fig. 7).

3. Kolbenmaschine nach Anspruch 2, **dadurch gekennzeichnet, dass** die Abstützungsflächen (16a) der Führungen (8a) gegen den Mittelbereich zu verbreitert, z. B. kreisförmig ausgebildet sind.

4. Kolbenmaschine nach einem der Ansprüche 1 bis 3, **dadurch gekennzeichnet, dass** die Summe der Umschlingungswinkel (Wu) der einander zugeordneten Lagerteilschalen um die Achse kleiner als 360° minus dem Schwenkwinkel (4, Wa) gewählt ist (Fig. 5).

5. Kolbenmaschine nach einem der Ansprüche 1 bis 3, **dadurch gekennzeichnet, dass** die Summe der Umschlingungswinkel (Wu) der einander zugeordneten Lagerteilschalen (13) um die Achse gleich oder größer als 360° minus dem Schwenkwinkel (4, Wa) gewählt ist und die Lagerteilschalen einander im Bereich der Totpunktstellungen des Kolbens mit ineinandergreifenden Absätzen (17, 18) bzw. Profilierungen überlappen.

6. Kolbenmaschine nach einem der Ansprüche 1 bis 5, **dadurch gekennzeichnet, dass** die Lagerteilschalen (13) als Gleitlagerelemente ausgebildet sind, die sich über den Außenring eines für beide Teilschalen (13) gemeinsamen Wälzlagers (19) auf dem Kolbenbolzen (4) abstützen, sodass dieses Wälzlager (19) zumindest im Auftrittsbereich der größeren Querkräfte wechselweise die Drehlagerung des momentan stärker belasteten Lenkarmes vom Gleitlager übernimmt.

7. Kolbenmaschine nach Anspruch 6, **dadurch gekennzeichnet, dass** als Gleitlager ein auf dem Außenring (16) des Wälzlagers aufgezogener Gleitbelagsring (20) vorgesehen ist, auf dem sich die Lagerteilschalen der Lenkarme abstützen.

8. Kolbemaschine nach den Ansprüchen 6 und 7, **dadurch gekennzeichnet, dass** als Wälzlager ein Nadellager (15) mit Dauerschmierung eingesetzt ist.

## Claims

1. Reciprocating engine in which each piston (3) is allocated additional guide devices for absorbing the transverse forces occurring during the pivot movements of the piston rod (5), which guide devices have, in an inverted manner, steering arms (9) which are mounted so as to be able to pivot about the axis of the piston pin (4) and which roll on lateral guides (8) e.g. of the cylinder wall or crankcase with supports (16, 16a) which follow circular portions which are concentric to the axis of the piston pin (4), **characterised in that** the steering arms (9) are mounted in pairs in the their own right and free of mutual support and guidance with the bearing part shells (13) allocated in each case to the same longitudinal region of the axis of the piston pin (4).

2. Reciprocating engine as claimed in claim 1, **characterised in that** the supports of the steering arms (4) engage with a central toothed track (12, 12a) into an allocated longitudinal toothed track (12) of the lateral guides (8, 16, 16a) and are supported on both sides of this guide track (12) with smooth surfaces (16, 16a) on the guide (Figure 7).

3. Reciprocating engine as claimed in claim 2, **characterised in that** the support surfaces (16a) of the guides (8a) are widened towards the central region, e.g. are formed in a circular manner.

4. Reciprocating engine as claimed in any one of claims 1 to 3, **characterised in that** the sum of the angles of wrap (Wu) of the mutually allocated bearing part shells about the axis is selected to be less than 360° minus the pivoting angle (4, Wa) (figure 5).

5. Reciprocating engine as claimed in any one of claims 1 to 3, **characterised in that** the sum of the angles of wrap (Wu) of the mutually allocated bearing part shells (13) about the axis is selected to be greater than or equal to 360° minus the pivoting angle (4, Wa) and the bearing part shells overlap in the region of the dead centre positions of the piston with intermeshing shoulders (17, 18) or profiles.

6. Reciprocating engine as claimed in any one of claims 1 to 5, **characterised in that** the bearing part shells (13) are formed as slide bearing elements which are supported on the piston pin (4) by means of the outer ring of a roller bearing (19) common to both part shells (13), so that this roller bearing (19), at least in the region where the larger transverse forces occur, alternately takes on the rotational support of the instantaneously more heavily loaded steering arm from the slide bearing.

7. Reciprocating engine as claimed in claim 6, **characterised in that** the slide bearing is provided in the form of a slide lining ring (20) which is fitted on the outer ring (16) of the roller bearing and on which the bearing part shells of the steering arms are supported.

8. Reciprocating engine as claimed in claims 6 and 7, **characterised in that** a permanently lubricated needle bearing (15) is used as the roller bearing.

## Revendications

1. Moteur à pistons, dans lequel à chaque piston (3) sont fixés des dispositifs de guidage supplémentaires pour la réception des forces transversales se produisant lors des mouvements de pivotement de la bielle (5), lesquels dispositifs de guidage comportent des leviers (9) placés pivotants, de manière opposée, autour de l'axe de tourillon du piston (4), qui roulent sur les guidages latéraux (8), par exemple la paroi du cylindre ou le carter du vilebrequin, les appuis suivants (16, 16a) avec des sections circulaires concentriques à l'axe du tourillon de piston (4), **caractérisée en ce que** les leviers (9) sont placés par paire, pour eux, et de manière libre par rapport à l'appui mutuel et au guidage avec des coquilles partielles de palier (13) coordonnées respectivement à la même zone longitunale de l'axe du tourillon de piston (4).

2. Moteur à pistons selon la revendication 1, **caractérisé en ce que** les appuis des leviers (4) sont en prise avec une trace de dents (12, 12a) centrale dans une trace de dent longitudinale (12), associée, des guidages latéraux (8, 16, 16a) et s'appuient, de part et d'autre de cette trace de guidage (12), avec des surfaces (16, 16a) planes au niveau du guidage (Figure 7).

3. Moteur à pistons selon la revendication 2, **caractérisé en ce que** les faces d'appui (16a) des guidages (8a) sont réalisées pour s'étendre contre la zone centrale, par exemple, de façon circulaire.

4. Moteur à pistons selon l'une des revendications 1 à 3, **caractérisé en ce que** la somme des angles d'embrassement (Wu) des coquilles partielles de palier coordonnées les unes aux autres autour de l'axe est choisie inférieure à 360° moins l'angle de pivotement (4, Wa). (Figure 5).

5. Moteur à pistons selon l'une des revendications 1 à 3, **caractérisé en ce que** la somme des angles d'embrassement (Wu) des coquilles partielles de palier (13) coordonnées les unes aux autres autour de l'axe est choisie égale ou supérieure à 360° moins l'angle de pivotement (4, Wa) et **en ce que** les coquilles partielles de palier se chevauchent les unes les autres, dans la zone des points morts supérieurs du piston, avec des embouts épaulements (17, 18) qui s'emboîtent ou des profilages.

6. Moteur à pistons selon l'une des revendications 1 à 5, **caractérisé en ce que** les coquilles partielles de palier (13) sont réalisées en tant qu'éléments de palier coulissant qui s'appuient sur le tourillon du piston (4) par le biais de la bague externe d'un palier à roulement (19) commun pour les deux coquilles partielles (13), de sorte que ce palier à roulement (19) prend en charge, alternativement, la rotation du levier, sollicité plus fortement à ce moment, du palier coulissant au moins dans la zone d'apparition des forces transversales plus importantes.

7. Moteur à pistons selon la revendication 6, **caractérisé en ce qu'**il est prévu en tant que palier coulissant une bague de revêtement de glissement (20) montée sur la bague externe (16) du palier à roulement (19), sur laquelle s'appuient les coquilles partielles de palier des leviers.

8. Moteur à pistons selon les revendications 6 et 7, **caractérisé en ce qu'**un roulement à aiguilles (15) avec lubrification permanente est employé en tant que palier à roulement.
